# EUROPÄISCHE PATENTSCHRIFT

(11) **EP 2 821 681 B1**
(45) Veröffentlichungstag und Bekanntmachung des Hinweises auf die Patenterteilung: **15.03.2017**
(21) Anmeldenummer: 14002134.6
(22) Anmeldetag: 22.06.2014
(51) Int. Cl.: F16K 11/20, F16K 37/00

(54) **Vorrichtung zur Druckluftverteilung mittels Schrittmotorverteiler**
Devicefor compressed air distribution using a stepping motor distributor
Dispositif de distribution d'air comprimé au moyen de distributeurs de moteur pas à pas

(30) Priorität: 27.06.2013 DE 102013010692
(43) Veröffentlichungstag der Anmeldung: 07.01.2015
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens

(56) Entgegenhaltungen:
- EP-A1- 1 990 317
- DE-A1- 19 624 901
- DE-A1-102005 057 723
- DE-A1-102008 011 171
- DE-A1-102010 005 166
- GB-A- 672 394
- GB-A- 1 095 995

## Beschreibung

Am einer Kleinkläranlage, einem Einsatzgebiet dieser Erfindung, sollen die Vorrichtung und das Verfahren näher erläutert werden.

Kleinkläranlagen oder kleine Kläranlagen dienen der dezentralen Abwasserbeseitigung in ländlich strukturierten Gebieten, in denen aus wirtschaftlichen oder sonstigen Gründen heraus kein Kanalanschluss vorhanden ist oder hergestellt wird bzw. werden kann.

Hier wird die aus den bestehenden gesetzlichen Verpflichtungen heraus resultierende Notwendigkeit der Abwasserreinigung durch Kleinkläranlagen oder kleine Kläranlagen realisiert.

Bei vielen dieser zum Einsatz kommenden Kleinkläranlagen/kleinen Kläranlagen ist die Notwendigkeit gegeben, dass der Kleinkläranlage/kleinen Kläranlage über eine Steuerung und einem Verdichter (Kompressor) verdichtete (komprimierte) Luft zugeführt wird. Diese komprimierte Luft (Druckluft) wird zum Beispiel für die Sauerstoffversorgung für den biologischen Reinigungsprozess benötigt. Bei vielen Anlagen wird darüber hinaus die Druckluft für verschiedene Pumpvorgänge innerhalb der Kleinkläranlage/kleinen Kläranlage mittels Druckluftheber (auch Mammutpumpe genannt) benötigt.

Um die Druckluft gezielt zu den einzelnen Verbrauchern (für die Belüftung beziehungsweise für eine oder mehrere Druckluftheber) in der Kleinkläranlage/kleinen Kläranlage zu verteilern, werden entsprechende Verteilersysteme eingesetzt.

Am gebräuchlichsten werden derzeit dazu Druckluftverteiler, die mit entsprechenden Magnetventilen bestückt sind, verwendet.

Dazu wird die Druckluft einem Grundkörper zugeführt, der mit einem oder mehreren Magnetventilen versehen ist. Jedem Magnetventil ist ein entsprechender Ausgang zugeordnet. Die Steuerung sorgt dafür, dass entsprechend der verfahrenstechnischen Notwendigkeit jeweils das Magnetventil geöffnet wird, welches den Ausgang zu dem betreffenden Verbraucher in der Kleinkläranlage dann öffnet. Der Nachteil dieser Art der Luftverteilung liegt darin, dass die Magnetventile entsprechende Schaltgeräusche verursachen. Da bei den Kleinkläranlagen häufig der Schaltschrank mit den Magnetventilen direkt an der Hauswand befestigt wird, führt dies zu entsprechenden Beeinträchtigungen. Weiterhin muss die elektrische Spule des Magnetventiles während des gesamten Öffnungsvorganges mit Strom versorgt werden. So ist dann zum Beispiel während eines 15 min dauernden Belüftungsvorganges permanent ein entsprechender Stromverbrauch vorhanden. Weiterhin ist von Nachteil, dass es beim Einsatz der Magnetventile dazukommen kann, dass die Magnetventile im abgeschalteten Zustand den Ausgang nicht gesichert schließen. Hintergrund ist hierfür, dass in der Regel sehr kleine Spulen verwendet werden, um den Stromverbrauch in Grenzen zu halten und um das Schaltgeräusch zu reduzieren. Durch die reduzierte Leistung der Spule kann auch nur eine schwache Rückholfeder verwendet werden. Dadurch kann es zum hängen bleiben der Magnetventile kommen. Dies hat eine gravierende Auswirkungen auf das Klärverfahren. Zudem haben Magnetventile in der Regel nur sehr geringe Hubhöhen von wenigen mm (häufig 2-3 mm), so dass jeweils nur ein kleiner Spalt zum Durchströmen der Druckluft zur Verfügung steht. Dies führt zu entsprechend großen Durchflusswiderständen, die sich als Belastung des Kompressors beziehungsweise in einem höheren Energieverbrauch niederschlagen. Auch werden Magnetventile beim Betrieb sehr heiß. Neben der thermischen Belastung der Ventile selbst führt dies dazu, dass der Einbau der Magnetventile zusammen mit Steuerungen in einem Gehäuse ebenfalls zu thermischen Problemen führt.

In der Offenlegungsschrift DE 10 2008 011 171 A1 ist eine weitere Möglichkeit beschrieben. Hierbei handelt es sich um einen Luftverteiler mit Schrittmotoren, die von einem Gehäuse umschlossen sind. Der Einbau der Schrittmotoren in ein geschlossenes Gehäuse beinhaltet folgende Nachteile:
- es muss ein großes Gehäuse mit entsprechenden Materialaufwand gebaut werden, damit die Schrittmotoren komplett in das Gehäuse integriert werden können
- es muss mindestens ein zweiteiliges Gehäuse verwendet werden, da das Gehäuse geöffnet werden muss, um an die Schrittmotoren heranzukommen (zum Einbau und zum Ausbau). Hier müssen entsprechend aufwändige Dichtungsmaßnahmen ergriffen werden, damit das Gehäuse trotz der zweigeteilten Ausführung die notwendige Dichtigkeit für den Betrieb als Druckluftverteiler aufweist (zum Beispiel durch eingelegte O-Ringe)
- da die Schrittmotoren innerhalb des Gehäuses mit Strom / Steuerbefehlen versorgt werden müssen, muss aus dem druckdichten Gehäuse eine aufwändige druckdichte Kabeldurchführung gebaut werden
- bei Reparaturen muss das komplette Gehäuse geöffnet werden, was zu entsprechend langen Reparaturzeiten entführt. Auch muss nach Reparaturen darauf geachtet werden, das die Gehäuse wieder druckdicht zusammengebaut werden.
- die in dem Gehäuse integrierten Motoren werden durch die sehr warme Druckluft aus dem Verdichter zusätzlich thermisch belastet, da die sehr warme Druckluft die in dem Gehäuse eingebauten Schrittmotoren ständig umspült.

Aus GB 1,095,995 ist ein Flüssigkeitsventil bekannt, bei dem ein Dichtelement tragender längsverstellbarer Stößel gegen einen Ventilsitz wi rkt.

GB 672,394 offenbart ein Ventil zum Auslassen von Flüssigkeiten aus einem Behältnis. Dieses Ventil ist als Spindelventil ausgeführt und trägt an seinem Ende ein Ventilelement, welches in seiner Geschlossenstellung gegen ein dem Ventilsitz zugeordnetes Lichtelement wirkt.

DE 196 24 901 A1 offenbart ein Strömungssteuerventil, dessen Stößel durch einen Spindelantrieb in längsaxialer Richtung bewegbar ist.

Die in den drei vorgenannten Dokumenten beschrieben Ventile sind allgemeiner Art, die keinen Bezug zu Kläranlagen-Druckluftverteilungsvorrichtungen haben

Der hier beschriebenen Erfindung liegt ausgehend von DE 10 2008 011 171 A1 die Aufgabe zugrunde, eine Luftverteilereinheit bereitzustellen, die die vorstehend genannten Nachteile nicht mehr aufweist und zudem weitere Vorteile aufweist.

Die Aufgabe wird durch eine Kläranlagen-Druckluftverteilungsvorrichtung mit den Merkmalen des Anspruchs 1 gelöst.

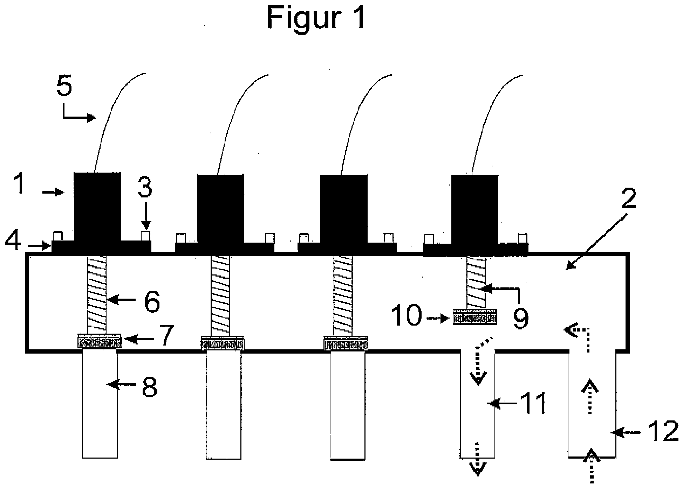

In der Figur 1 ist ein solcher Luftverteiler beispielhaft dargestellt. Dabei ist der Antrieb des Schrittmotors (1) auf dem Grundkörper (2) und damit außerhalb der Druckkammer des Grundkörpers befestigt. Beispielhaft dargestellt ist dies mit Schrauben (3). Zwischen dem Flansch (4) und dem Grundkörper (2) kann zur Abdichtung eine Flachdichtung oder beispielsweise ein O-Ring verwendet werden.

Der Antrieb des Schrittmotors (1) ist mit einem Kabel (5) mit einer Steuerung verbunden, so dass die entsprechenden Steuerbefehle von der Steuerung an den Schrittmotor gegeben werden können.

Die Achse (6) verfügt zumindest in einem Teilbereich (in dem Bereich, der in den Schrittmotor hineinreicht) über ein entsprechendes Gewinde, so dass bei eingeschaltetem Schrittmotor die Achse (6) linear, das heißt hoch und runter, verfahren werden kann. Dabei dreht die Achse selbst nicht. Durch das am unteren Ende der Achse angebrachte Dichtungselement (7) wird je nach Stellung der Achse der Ausgang geöffnet oder geschlossen. Wird die Achse (6) durch einen entsprechende Schaltung der Steuerung mit dem Dichtungselement (7) nach oben gefahren, wird der Ausgang (8) freigegeben, so dass die über den Eingang (12) in den Grundkörper einströmende Druckluft über den Ausgang (8) bei geöffneten Dichtungselement zu dem an Ausgang (8) angeschlossenen Verbraucher (zum Beispiel Druckluftheber) weitergeleitet werden kann.

In der Figur 1 ist erkennbar, dass die Achse (9) mit dem Dichtungselement (10) hochgefahren ist. Dadurch ist der Ausgang (11) geöffnet, so dass die über den Eingang (12) zugeführte Druckluft über den Ausgang (11) an den daran angeschlossenen Verbraucher weitergeleitet werden kann.

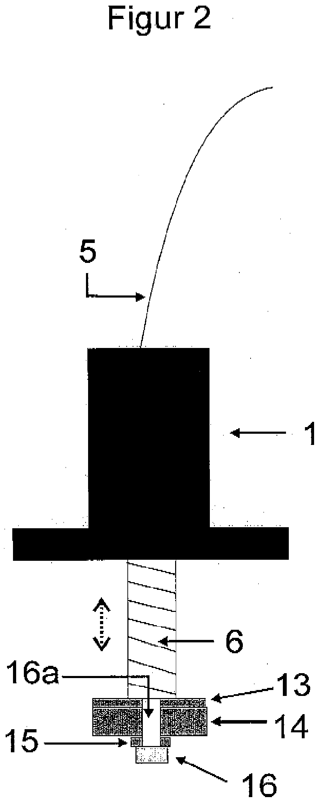

Eine beispielhafte Ausführung dieser Vorrichtung kann nach Figur 2 auch darin bestehen, dass der Schrittmotor (1) mit Kabel (5) über eine entsprechende in der Höhe verfahrbare Achse (6) verfügt. Die Achse (6) dreht sich dabei nicht selbst, sondern wird nur in der Höhe verfahren (hoch und runter bewegt). Das untere Ende der Achse verfügt beispielsweise über einen kleineren Durchmesser (16a) mit einem Gewinde am Ende, so dass beispielsweise eine Unterlegscheibe (13) einem entsprechenden Dichtungselement (14) einen entsprechenden Halt bietet. Eine Mutter (16) in Verbindung mit einer Unterlegscheibe (15) fixiert das Dichtungselement (14). Gleichzeitig ermöglicht diese Anordnung ein leichtes Wechseln zum Beispiel von dem Dichtungselement (14).

In einer weiteren Ausgestaltung kann zum Beispiel das Dichtungselement (14) hinsichtlich Material und Stärke so gewählt werden, dass über einen weiten Zeitraum eine entsprechende Elastizität und Dichtwirkung gegeben ist. Vorteilhaft haben sich Materialstärken zwischen 0,5 und 8 mm erwiesen. Als ebenfalls vorteilhaft haben sich Elastomere als Material für das Dichtungselement erwiesen. Besonders geeignet sind NBR-NR, EPDM, NR-SBR und Silikon sowie verschiedene weitere Gummiarten. Hinsichtlich der Härte des Dichtungselementes (14) haben sich Materialien zwischen 10 und 100 Shore als vorteilhaft erwiesen. Durch die Kombination von Materialstärke und Materialhärte kann eine entsprechende Langlebigkeit von Antrieb und Achse erreicht werden, da beim Zufahren der Motor in seinem Drehmoment beziehungsweise in dem Gewinde der Achse beim herausfahren aus dem Motor in die Endlage zur Abdichtung durch das Material einen weichen Dichtung hat, so dass die Beanspruchung des Motors sehr gering ist. Damit kann die Lebensdauer des elektrischen Antriebs und des mechanischen Antriebs beziehungsweise dem Antriebsgewinde der Achse in deutlicher Weise gesteigert werden.

In einer weiteren nicht erfindungsgemäßen Gestaltung kann auch ein Schrittmotor eingesetzt werden, bei dem sich die Achse (6) selbst dreht, so dass über ein Gewinde der Achse im Bereich des Dichtungselementes (7) das in diesem Fall nicht mitdrehende Dichtungselement (beispielsweise mit einem eigenen Gewinde versehen, dabei kann das Gewinde des Dichtungselemente des auch ein in der Dichtung Elemente eingelassenes Metallgewinde sein) durch die Drehbewegung der Achse in der Höhe hoch und runter gefahren werden kann. In dieser Ausgestaltung ist das Dichtungselement aber gegen eigenes Verdrehen durch konstruktive Maßnahmen, zum Beispiel eine Führungsstange oder eine entsprechende Ausprägung am Grundkörper, verhindert. In gleicher Weise kann die Scheibe (13) am Verdrehen gehindert werden, so dass sich auch die das Dichtungselement stützende Scheibe beim Drehen der Achse mit hoch und runter fährt. Auch eine unter dem Dichtungselemente sitzende kleine Scheibe mit Gewinde kann hierfür genutzt werden.

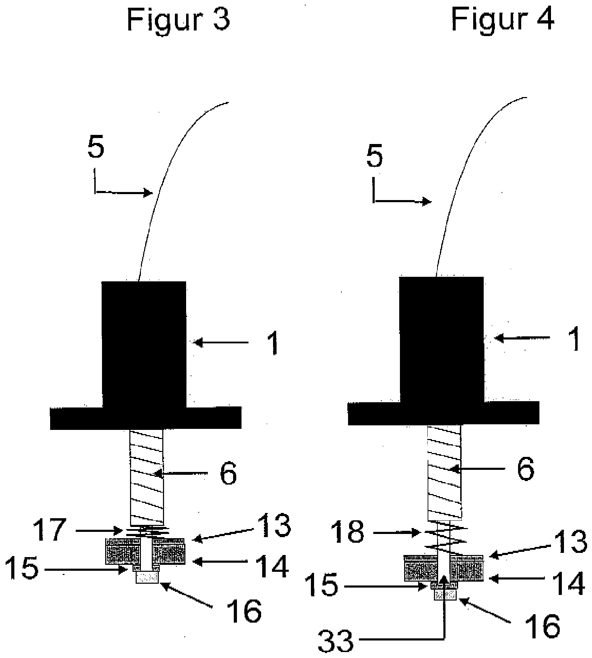

In der Figur 3 und Figur 4 ist eine weitere beispielhafte Ausgestaltung dargestellt.

Eine weitere beispielhafte Ausführung dieser Vorrichtung kann nach Figur 3 und Figur 4 auch darin bestehen, dass der Schrittmotor (1) mit einem zu einer Stromquelle oder Steuerung führenden Kabel (5) über eine entsprechende in der Höhe verfahrbare Achse (6) verfügt. Das untere Ende der Achse verfügt über einen kleineren Durchmesser mit einem Gewinde am Ende, so dass beispielsweise eine Unterlegscheibe (13) einem entsprechenden Dichtungselement (14) einen entsprechenden Halt bietet. Eine Mutter (16) in Verbindung mit einer Unterlegscheibe (15) fixiert das Dichtungselement (14). Zwischen Unterlegscheibe (15) und der Achse (6) ist eine Feder (17 beziehungsweise 18) eingebaut.

In Figur 3 ist die Feder (17) zusammengedrückt (gespannt), in Figur 4 (ehemals Figur 103) ist die Feder (18) entspannt.

Hierbei können verschiedene Ausführungen gewählt werden:
- eine Möglichkeit besteht darin, dass die Komponente (33) in der Figur 4 in die Achse (6) hinein beziehungsweise heraus geschoben werden kann und dadurch die Feder (17,18) einen entsprechenden Wirkungsspielraum erhält
- eine andere Möglichkeit besteht darin, dass die Komponente (33) in der Figur 4 nicht in die Achse (6) geschoben werden kann. Stattdessen kann entlang der Komponente (33) die Scheibe (13) und das Dichtungselement (14) verschoben werden. Auch hierbei erhält die Feder (17,18) einen entsprechenden Wirkungsspielraum.
Der Vorteil der eingebauten Feder liegt darin, dass beim Zufahren der Achse (6) immer gewährleistet ist, dass das Dichtungselement (14) den Ausgang nach den Zufahrten absolut dicht schießt. Schrittmotoren bekommen von einer Steuerung eine exakte Wegstrecke zum Verfahren der Achsen (6) vorgegeben. Wenn das Dichtungselement im Lauf der Zeit durch das häufige Auf- und Zufahren in seiner Dichtwirkung nachlässt (zum Beispiel durch Verformung), kann mit dieser Ausführung nun der Schrittmotor das Dichtungselement (14) mit einem immer vorhandenen Federdruck auf den Ausgang fahren. Die Federspannung sorgt dafür, dass auch bei einer verformten Dichtung (bei einer eingedrückten Dichtung und damit einer reduzierten Stärke reicht der einmal vorgegebene Fahrweg der Achse nicht mehr aus, um die erforderliche Dichtigkeit herzustellen) durch den entsprechenden Federdruck die Abdichtwirkung gegeben ist, auch wenn das zum Beispiel 4 mm starke Dichtungselement (14) durch viele Schaltvorgänge nur noch eine Stärke von 3,8 mm hat. Bei einer fixen Befestigung des Dichtungselementes (14) würde nun die Achse (6) des Schrittmotors den von der Steuerung vorgegebenen Weg zurücklegen. Durch das verformte (eingedrückte) Dichtungselementes (14) könnte nun der Ausgang nicht mehr vollständig verschlossen werden. Deshalb verbliebe ein Spalt von 0,2 mm. Die Feder sorgt nun dafür, dass auch bei einer Stärke des Dichtungselementes von nur noch 3,8 mm der Ausgang vollständig geschlossen wird, da die Feder die Unterlegscheibe mit dem Dichtungselement nach unten drückt und somit den Ausgang durch die ständige Federspannung dicht verschließt. Gleichzeitig wird der Motor mit seinem Antrieb enorm entlastet, da der Motor mit der Achse nicht mehr auf einen festen Endpunkt, sondern nur noch in seinem vorgegebenen Fahrweg gegen die elastische Feder fährt.

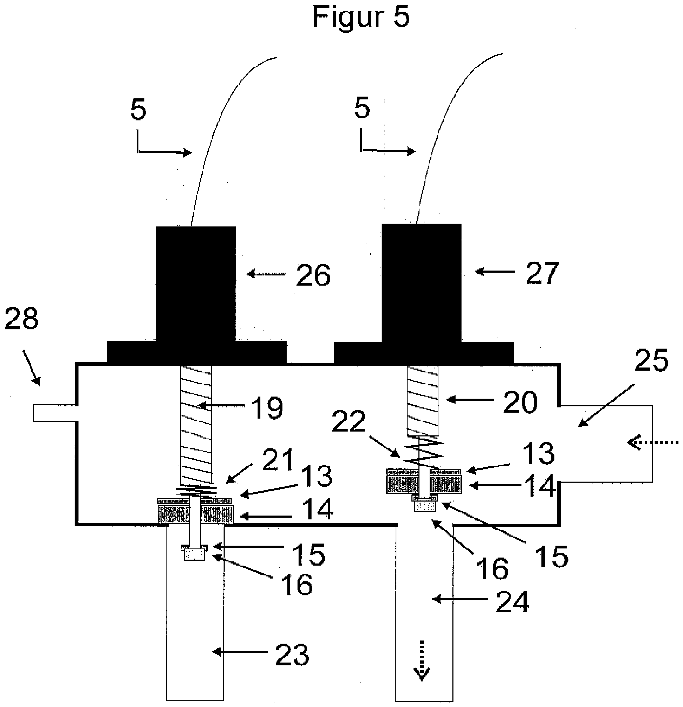

In der Figur 5 ist die zuvor beschriebene Vorrichtung noch einmal dem einer beispielhaften Ausführung eines Grundkörpers abgebildet Die Achse (19) ist aus dem Motor (26) herausgefahren Dabei ist die Feder (21) zusammengedrückt. Das Dichtungselement (14) dichtet durch die Federkraft der Feder (21) den Ausgang (23) ab, ohne dass der Motor (26) die Achse (19) in einer den Motor belastende Endlage gegen einen festen Punkt und damit hohen Widerstand beziehungsweise in ein hohes Drehmoment fahren musste. In der gleichen Figur ist die Achse (20) vom Motor (27) hochgefahren. Die Feder (22) ist entspannt. Der Ausgang (24) ist dadurch geöffnet, so dass die von dem Eingang (25) einströmende Druckluft durch den Ausgang (24) zu dem entsprechend angeschlossenen Verbraucher geleitet werden kann.

Durch diese Anordnung können sehr lange Revisionsintervalle erreicht werden, da es im Grunde nicht mehr nötig ist, den Verfahrweg der Achse genau zu justieren beziehungsweise nachzustellen. Auch bei der Fertigung dieser Systeme muss nicht mehr mit einer hohen Genauigkeit gearbeitet werden, da der Federweg der Achse Ungenauigkeiten zum Beispiel beim Fertigungsprozess problemlos ausgleichen kann. Dies führt naturgemäß zu entsprechenden Einsparungen.

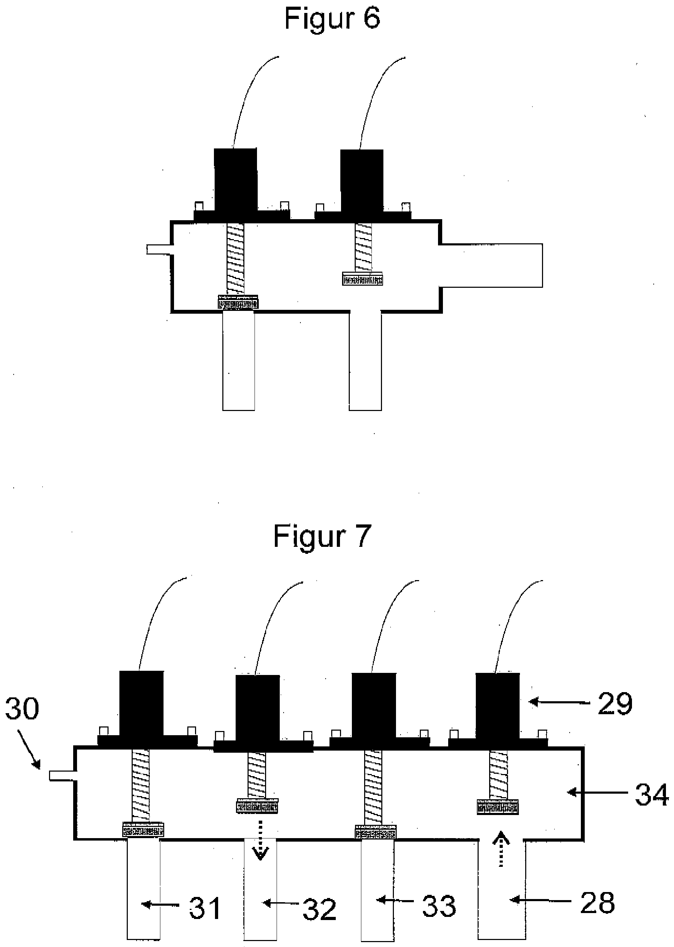

Um die Funktionalität des Verfahrens über einen langen Zeitraum zu gewährleisten, kann in einer besonderen Ausgestaltung über einen mit einem Schlauch über den Anschluss (28) angeschlossenen Drucksensor in der Steuerung sowohl eine Höhenstandserfassung des Wasserspiegels zum Beispiel beim Belüftungsvorgang als auch eine Überwachung des minimalen Druckes und maximalen Druckes des Kompressors durchgeführt werden. Weiterhin kann entsprechend Figur 7 (ehemals Figur 106) der Eingang (28) mit einem Schrittmotor (29) geöffnet und verschlossen werden. Wenn zum Beispiel gemäß Figur 7 alle vier Schrittmotoren 1 s vor abschalten des Verdichters zufahren, kann der im Gehäuse (34) befindlichen Druck über einen am Ausgang (30) angeschlossenen Schlauch an eine Drucksensor in der Steuerung weitergeleitet werden, so dass die Steuerung die Dichtigkeit des Gehäuses und alle angeschlossenen Ausgänge überprüfen kann. Durch eine Beobachtung des gemessenen Druckes über einen entsprechenden Zeitraum durch die Steuerung kann diese Steuerung bei Überschreiten eines voreingestellten Druckverlustes eine entsprechende Störung anzeigen und für eine kurzfristige Instandsetzung sorgen. Damit wird eine höhere Sicherheit des Systems erzeugt.

In einer Ausgestaltung des Verfahrens könnte die Steuerung im Rahmen der Drucküberwachung des Druckluftverteilers bei einer entsprechend festgestellten Undichtigkeit automatisch den Schrittmotoren einen längeren Fahrweg der Achsen vorgeben, so dass durch den längeren Fahrweg der Achsen die erforderliche Dichtigkeit selbstständig herstellen. Einfacher ausgedrückt, die Steuerung gibt den Schrittmotoren den Befehl, statt zum Beispiel 8,9 mm nun 9,0 mm zu zufahren. Damit kann zum Beispiel ein eingedrücktes Dichtungselement wieder abdichten. Gleichzeitig kann das System bei geöffnetem Ausgang für den Belüftungsvorgang oder eines anderen Ausgangs und mittels Schrittmotor geschlossenen Eingang (Verbindung zum Verdichter) eine Messung des Gleichgewichtsdrucks über einen Drucksensor, der an den Ausgang (30) angeschlossen ist, durchführen und damit eine Messung des Wasserstandes vornehmen, so dass die Kleinkläranlage höhenstandsgesteuert und damit energieeffizient gefahren werden kann. Durch das Schließen des Einganges (28) und gleichzeitig einen geöffneten Ausgang (31 oder 32 oder 33) kann die im System befindlichen Druckluft nicht mehr zum Kompressor zurückströmen. Damit kann der Drucksensor der Steuerung über eine Verbindungsleitung zum Ausgang (30) den Druck im System messen und damit eine sehr genaue Wasserstandmessung durchführen.

Durch die Befestigung der Schrittmotoren außerhalb des Grundkörpers sind die Motoren vor der thermischen Belastung der vom Verdichtungsprozess erwärmten Luft geschützt. Gleichzeitig ist die Montage und Demontage der Motoren sehr einfach, da die Motoren von außen zugänglich sind. Aufwändige Dichtungsarbeiten entfallen. Durch die Verwendung entsprechend optimierter Dichtungselemente beziehungsweise alternativ federbelasteter Dichtungselemente werden die Schrittmotoren mechanisch, thermisch und energetisch entlastet, da die Schrittmotoren nicht mehr durch einen den Antrieb des Schrittmotors entsprechend belastenden festen Punkt mit hohem Drehmoment fahren müssen. Dieses hohe Drehmoment tritt dann auf, wenn das Dichtungselement in konventioneller Weise (dünn und/oder hart) nur dadurch die Dichtigkeit erzielen kann, wenn der Schrittmotoren dieses Dichtungselement mit großer Kraft auf die Dichtfläche drückt.

Die Vorteile der Erfindung liegen somit in der einfachen Konstruktion, der einfachen Herstellung, der einfachen Wartung, einen nur geringen mechanisch beanspruchten Schrittmotor, einer thermischen und mechanischen Entlastung des Schrittmotors und einem geringen Energieverbrauch, da die Schrittmotoren nur während es auf- und zufahren einen geringen Stromverbrauch haben. Im geöffneten Zustand selbst verbrauchen die Schrittmotoren keinen Strom. Ebenso entfallen aufwändige druckdichte Kabeldurchführungen.

## Patentansprüche

1. Kleinkläranlagen-Druckluftverteilungsvorrichtung mit einem als Druckluftverteiler dienenden Grundkörper (2), einer zuführenden Leitung von Druckluft (12, 25) in den Grundkörper (2) und mindestens einer abführenden Leitung von Druckluft (11, 24) aus dem Grundkörper (2) heraus sowie mit mindestens einem Schrittmotor (1, 26, 27, 29) mit einer beweglichen Achse (6, 9, 19, 20) an der ein Dichtungselement (7, 14, 10) angebracht ist, **dadurch gekennzeichnet, dass** der zumindest eine Schrittmotor (1) außerhalb des Grundkörpers (2) auf diesem befestigt ist und mit einem Kabel (5) mit einer Steuerung verbunden ist, wobei die bewegliche Achse (6, 9, 19, 20) des mindestens einen Schrittmotors (1, 26, 27, 29) zumindest in einem Bereich, der in den Schrittmotor (1, 26, 27, 29) hineinragt, über ein Gewinde verfügt und dadurch linear verfahren werden kann, wodurch der Ausgang durch das am unteren Ende der Achse angebrachte Dichtungselement (7, 14, 10) je nach Stellung geöffnet oder geschlossen werden kann, ohne dass die Achse (6, 9, 19, 20) bei einem Antrieb des Schrittmotors selbst dreht.

2. Kleinkläranlagen-Druckluftverteilungsvorrichtung nach Anspruch 1, **dadurch gekennzeichnet, dass** das Dichtungselement (7, 14, 10) gegen die Spannung einer Feder (17, 18, 21, 22) auf der Achse (6, 9, 19, 20) verschoben werden kann.

3. Kleinkläranlagen-Druckluftverteilungsvorrichtung nach einem oder mehreren der vorstehenden Ansprüche, **gekennzeichnet dadurch, dass** die Achse (6, 9, 19, 20) gegen die Spannung einer Feder (17, 18,21, 22) ineinander geschoben werden kann.

4. Kleinkläranlagen-Druckluftverteilungsvorrichtung nach einem oder mehreren der vorstehenden Ansprüche, **gekennzeichnet dadurch, dass** das Dichtungselement (7, 14, 10) eine Höhe zwischen 0,5 und 8 mm aufweist.

5. Kleinkläranlagen-Druckluftverteilungsvorrichtung nach einem oder mehreren der vorstehenden Ansprüche, **gekennzeichnet dadurch, dass** das Dichtungselement einen Werkstoffkennwert zwischen 10 und 100 Shore Härte aufweist.

6. Kleinkläranlagen-Druckluftverteilungsvorrichtung nach einem der Ansprüche 1 bis 5, **dadurch gekennzeichnet, dass** der Grundkörper (2) einen Anschluss (28, 30) zum Anschließen eines Drucksensors aufweist.

7. Kleinkläranlage mit einer Druckluftverteilungsvorrichtung, **dadurch gekennzeichnet, dass** die Druckluftverteilungsvorrichtung nach einem der Merkmale der Ansprüche 1 bis 6 ausgelegt ist.

## Claims

1. Compressed air distribution device for small purification plants, comprising a base body (2) serving as a compressed air distributor, a line (12, 25) for delivering compressed air into the base body (2) and at least one line (11, 24) for leading compressed air out of the base body (2), as well as with at least one stepping motor (1, 26, 27, 29) with a movable axle (6, 9, 19, 20), located on which is a sealing element (7, 14, 10), **characterised in that** the at least one stepping motor (1) is secured to the outside of the base body (2) and is connected by a cable (5) to a control unit, wherein the moving axle (6, 9, 19, 20) of the at least one stepping motor (1, 26, 27, 29) is provided with a thread at least a region of which projects into the stepping motor (1, 26, 27, 29), and thereby can be moved in a linear manner, as a result of which the outlet can be opened or closed by the sealing element (7, 14, 10) located at the lower end of the axle, depending on its setting, without the axle (6, 9, 19, 20) itself rotating when the stepping motor is driven.

2. Compressed air distribution device for small purification plants according to claim 1, **characterised in that** the sealing element (7, 14, 10) can be displaced on the axle (6, 9, 19, 20) against the tension of a spring (17, 18, 21, 22).

3. Compressed air distribution device for small purification plants according to any one or more of the preceding claims, **characterised in that** the axle (6, 9, 19, 20) can be pushed into itself against the tension of a spring (17, 18, 21, 22).

4. Compressed air distribution device for small purification plants according to any one or more of the preceding claims, **characterised in that** the sealing element (7, 14, 10) exhibits a height of between 0.5 and 8 mm.

5. Compressed air distribution device for small purification plants according to any one or more of the preceding claims, **characterised in that** the sealing element exhibits a material characteristic value of between 10 and 100 Shore hardness.

6. Compressed air distribution device for small purification plants according to any one of claims 1-5, **characterised in that** the base body (2) comprises a connection (28, 30) for connecting a pressure sensor.

7. Small purification plant with a compressed air distribution device, **characterised in that** the compressed air distribution device is configured in accordance with the features from claims 1 to 6.

## Revendications

1. Dispositif de distribution d'air comprimé pour petites stations d'épuration comportant un corps de base (2) faisant office de distributeur d'air comprimé, une conduite d'acheminement d'air comprimé (12, 25) dans le corps de base (2) et au moins une conduite d'évacuation d'air comprimé (11, 24) sortant du corps de base (2) et comportant au moins un moteur pas à pas (1, 26, 27, 29) doté d'un axe mobile (6, 9, 19, 20) sur lequel est monté un élément d'étanchéité (7, 14, 10), **caractérisé en ce que** l'au moins un moteur pas à pas (1) est fixé à l'extérieur du corps de base (2), sur ce dernier, et est raccordé par un câble (5) sur une commande, l'axe mobile (6, 9, 19, 20) de l'au moins un moteur pas à pas (1, 26, 27, 29) disposant dans au moins une zone qui s'engage dans le moteur pas à pas (1, 26, 27, 29), d'un filetage et pouvant de ce fait être actionné de manière linéaire, ce qui permet d'ouvrir ou de fermer, en fonction de la position, l'élément d'étanchéité (7, 14, 10) monté sur l'extrémité inférieure de l'axe, sans que l'axe (6, 9, 19, 20) lui-même ne tourne lors d'un entraînement du moteur pas à pas.

2. Dispositif de distribution d'air comprimé pour petites stations d'épuration selon la revendication 1, **caractérisé en ce que** l'élément d'étanchéité (7, 14, 10) peut être décalé sur l'axe (6, 9, 19, 20) contre la tension d'un ressort (17, 18, 21, 22).

3. Dispositif de distribution d'air comprimé pour petites stations d'épuration selon une ou plusieurs des revendications précédentes, **caractérisé en ce que** l'axe (6, 9, 19, 20) peut être poussé l'un dans l'autre contre la tension d'un ressort (17, 18,21, 22).

4. Dispositif de distribution d'air comprimé pour petites stations d'épuration selon une ou plusieurs des revendications précédentes, **caractérisé en ce que** l'élément d'étanchéité (7, 14, 10) présente une hauteur située entre 0,5 et 8 mm.

5. Dispositif de distribution d'air comprimé pour petites stations d'épuration selon une ou plusieurs des revendications précédentes, **caractérisé en ce que** l'élément d'étanchéité présente des caractéristiques techniques du matériau avec une dureté Shore située entre 10 et 100.

6. Dispositif de distribution d'air comprimé pour petites stations d'épuration selon l'une des revendications 1 à 5, **caractérisé en ce que** le corps de base (2) présente un raccord (28, 30) permettant de raccorder un capteur de pression.

7. Petite station d'épuration comportant un dispositif de distribution d'air comprimé **caractérisée en ce que** le dispositif de distribution d'air comprimé est conçu selon l'une des caractéristiques des revendications 1 à 6.
